# EUROPEAN PATENT APPLICATION

(11) **EP 1 217 424 A1**
(43) Date of publication of application: **26.06.2002**
(21) Application number: 01129996.3
(22) Date of filing: 17.12.2001
(51) Int. Cl.: G02F 1/1337, G02F 1/1335, G02B 27/28, G02B 5/30, G03F 7/20

(54) **Polarized light illuminator for optical alignment**

(30) Priority: 22.12.2000 JP 2000390313
(71) Applicant: USHIODENKI KABUSHIKI KAISHA, Chiyoda-ku, Tokyo 100-0004 (JP)
(72) Inventor: Suzuki, Shinji, Yokohama-shi, Kanagawa-ken (JP); Umemoto, Shinichi, Hachiozi-shi, Tokyo-to (JP)
(74) Representative: Tomerius, Isabel, Dr. Dipl.-Chem.

(57) **Abstract**

To reduce the size of an optical unit having a polarizing device and an integrator lens, to cut costs, and to reduce the size of the entire device light from a lamp is incident on a lens group on the light incidence side of an integrator lens, the polarizing device is located between a lens group on the light incidence side and a lens group on the light exit side of the integrator lens. The light incident on the polarizing device is subjected to polarization separation. The polarized light emerging from the lens group on the light exit side is converted into parallel light via a shutter and a second planar mirror by means of a collimator and is emitted onto a workpiece. Since the polarizing device is located between the lens group on the light incidence side and the lens group on the light exit side, the length of the optical path can be reduced. Furthermore, the diameter of the polarizing device is prevented from becoming large. Thus, the size of the device can be reduced. The polarizing device can be a polarizing device in which there are several polarized light beam splitters or several glass plates arranged obliquely.

## Description

### Background of the Invention

### Field of the Invention

The invention relates to a polarized light illuminator for optical alignment, in which an alignment layer of a liquid crystal cell element and a wide view film which is integrated into the liquid crystal cell are irradiated with polarized light.

### Description of Related Art

A liquid crystal cell element is produced as follows:
- An alignment layer formed on the surface of a transparent substrate is treated to align the liquid crystals in the desired direction (alignment treatment).
- Two of these transparent substrates are cemented to one another such that the alignment layers are located on the inside and a gap with a stipulated distance between the two substrates is maintained.
- Liquid crystals are injected into this gap.

For the above described alignment treatment of the alignment layer of a liquid crystal cell element, there is a technique which is called "optical alignment". Here, an alignment layer is irradiated with polarized light and exposed.

A polarized light illuminator for optical alignment is disclosed, for example, in Japanese patent specification 2928226 (corresponding to published European Patent Application EP 0 913 720 A2) and Japanese patent specification 2960392 (corresponding to European Patent Application EP 1 102 093 A1).

Recently, the polarized light illuminator has been used more and more often for optical alignment of a wide view film, besides for producing a liquid crystal cell element. A wide view film is produced as follows:
- Liquid crystals which are to be UV-hardened are applied to the base film.
- Liquid crystal molecules are located (aligned) in a certain direction.
- Afterwards the liquid crystals are hardened by UV irradiation so that the direction of the liquid crystal molecules is manifested.

The reduction in image quality can be equalized by cementing a wide view film onto the liquid crystal cell.

The above described alignment process of the "arrangement of liquid crystal molecules in a certain direction" was conventionally done by rubbing. But recently, more and more often, it is done using the above described illuminator and by optical alignment.

It is necessary for the polarizing device which is used for the above described illuminator to have resistance to heat and intense light. As one such polarizing device, several glass plates are inclined with respect to the optical axis by the Brewster angle and are located parallel to one another at distances (hereinafter called a "pile polarization plate"). Or a multi-layer film (interference film) is used as such a polarizing device.

In the aforementioned Japanese patent specifications 2928226 and 2960392, an arrangement is shown in which a polarizing device using a pile polarization plate or the multi-layer film is located in the vicinity of an integrator lens. When the polarizing device is located in the vicinity of an integrator lens, a reduction in size can be achieved more easily than in an arrangement of a polarizing device between the collimator (or a collimator mirror) and a workpiece because the light beam is small in the vicinity of the integrator lens.

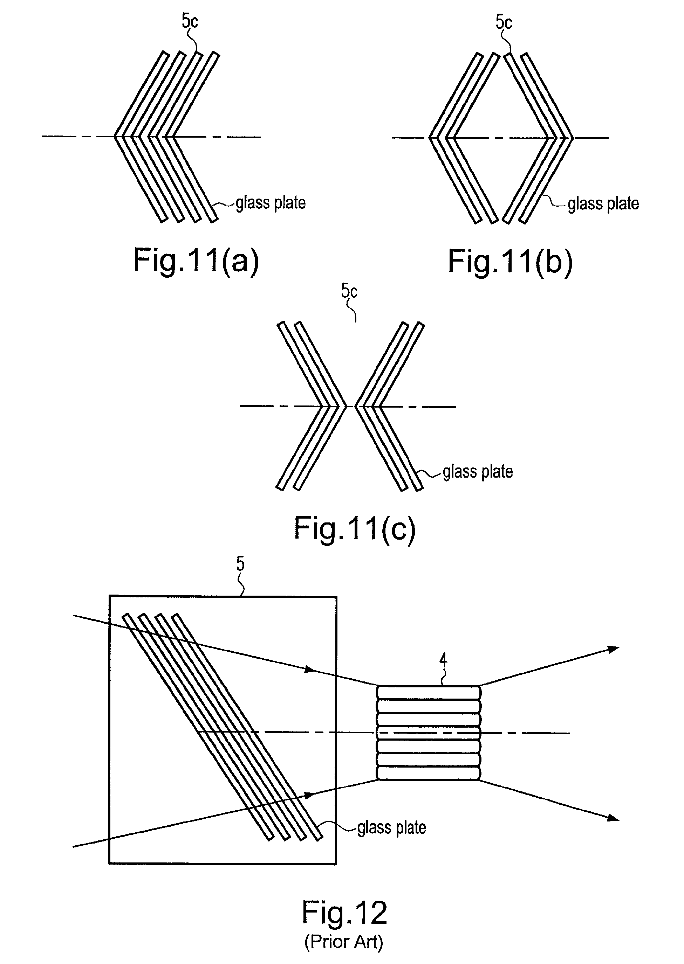

However, in the case of an arrangement of the polarizing device in the vicinity of the integrator lens, it is also necessary to make the diameter of the polarizing device 5 larger than the diameter of the integrator lens 4, as shown in Figure 12, since on the incidence side or the outlet side of the integrator lens, the light beam is larger than the diameter of the integrator lens. Therefore, the polarizing device becomes large.

Especially in a polarizing device using a pile polarization plate, it is necessary to increase the number of glass plates which are to be arranged parallel to one another in order to obtain the extinction ratio necessary for alignment of the above described alignment layer. This likewise increases the length of the optical path, as is shown in Figure 12, by which the entire device becomes large. Furthermore, costs are increased due to the increase in the size of the polarizing device.

### Summary of the Invention

The invention was devised to eliminate the above described disadvantages of the prior art. Thus, objects of the invention are to reduce the size of an optical unit which is comprised of a polarizing device and an integrator lens and which is used for a polarized light illuminator for optical alignment, to cut costs and to reduce the size of the entire device.

These objects are achieved in accordance with the invention as follows:

(1) In an integrator lens in which there is a lens group on the light incidence side and a lens group on the light exit side apart from one another, a polarizing device is provided between the lens group on the light incidence side and the lens group on the light exit side. In the integrator lens with the above described arrangement, the distance between the lens group on the light incidence side and the lens group on the light exit side in the direction of the optical axis is fixed by an optical construction considering the area required on the irradiation surface, the focusing angle of a focusing mirror and the like. Generally, a space is formed between the lens group on the light incidence side and the lens group on the light exit side which can be effectively used by placing a polarizing device in it. In this way, the lengthening of the optical path by the polarizing device can be eliminated. Moreover, the diameter of the light beam in this space is essentially identical to the diameter of the integrator lens. Therefore, the diameter of the polarizing device can also be made essentially the same size as the diameter of the integrator lens. Thus, the diameter of the polarizing device can be made smaller than in an arrangement of the polarizing device on the light incidence side or the light exit side of the integrator lens. Therefore, the entire optical unit comprised of the polarizing device and integrator lens can be made smaller.

The polarizing device which is located between the lens group on the light incidence side and the lens group on the light exit side can be a polarizing device which has resistance to heat and intense light, such as a polarizing device using a polarized light beam splitter, the above described polarizing device using a multi-layer film, the above described pile polarizing plate and the like. When using a pile polarization plate, a pile polarizing plate can be used in which several angled glass plates which have been combined with one another in a <-shape are used. In this way, the length in the direction of the optical axis can be reduced, and between the lens groups there can also be a polarizing device when the distance between the lens group on the light incidence side and the lens group on the light exit side in the direction of the optical axis of the integrator lens must be reduced.

(2) A polarized light beam splitter is used as the polarizing device. The polarizing device is formed by combining several polarized light beam splitters with one another. The boundary surfaces of the above described polarized light beam splitter are located in the shadow areas which are formed by irradiation of the lens boundary surfaces of the above described lens group on the light incidence side with light which is incident on the integrator lens.

There is a polarized light beam splitter as the polarizing device which has resistance to heat and intense light. A polarized light beam splitter is produced by vacuum evaporation of an inorganic, dielectric, multi-layer film as a polarization separating film onto the inclined surface of a right-angled prism and by cementing the inclined surfaces of two right-angle prisms to one another.

The unpolarized light incident on the polarized light beam splitter is separated into P-polarized and S-polarized light by the inorganic, dielectric, multi-layer film. The P-polarized light propagates in a straight line and is transmitted by the beam splitter. The S-polarized light is reflected.

Since the prisms which form the polarized light beam splitter are made of quartz glass, they are resistant to heat and intense light.

Since the inorganic, dielectric, multi-layer film which is a polarization separation film also consists of an inorganic material, it has resistance to heat and intense light. Furthermore, an inorganic, dielectric, multi-layer film can be produced which at a predetermined wavelength has a good polarization separation characteristic (which has a high extinction ratio, for example, a small portion of the S-polarized light in the transmitted polarized P-polarized light).

In the case of using the above described polarized light beam splitter as a polarizing device, it is advantageous to combine several polarized light beam splitters with one another and form a polarizing device. In this way, the length of the polarizing device in the direction of the optical axis can be reduced, and therefore, a reduction in size achieved. Furthermore, since the length in the direction of the optical axis can be reduced, the polarizing device can also be placed between the lens groups when the distance between the lens group on the light incidence side and the lens group on the light exit side must be reduced in the direction of the optical axis of the integrator lens.

When the lens group on the light incidence side is irradiated with light, the boundary surfaces of the lens become shadowy. If the boundary surfaces of the polarized light beam splitters which form the above described polarizing device are located in these shadow areas, the boundary surfaces of the polarized light beam splitters can be prevented from being projected onto the irradiation surface. Thus, a reduction in the illuminance on the irradiation surface and degradation of the distribution of illuminance can be prevented.

(3) The lenses which form the polarized light beam splitters, the lenses comprising the lens group on the light incidence side of the above described integrator lens, and/or the lenses which form the lens group on the light exit side are formed integrally with one another. In this way, the number of components can be reduced.

(4) The prisms comprising the polarized light beam splitters are joined to one another with "optical contact". An adhesive or a sealant is applied to the vicinity of the joining surfaces.

Usually, an adhesive or sealant is used to cement the inclined surfaces of two right-angled prisms to one another. However, currently, commercial adhesives or sealants absorb UV light and are degraded over time when they are irradiated with UV light with the wavelength which is used for optical alignment (currently with respect to the material for the alignment layer often with a wavelength from 200 nm to 340 nm). As a result, the transmission factor of the UV light is reduced. To join the polarized light beam splitters, therefore "optical contact" is used. However, "optical contact" is easily lost by influences such as temperature change and humidity. In a polarized light illuminator, it is necessary to keep properties, such as the extinction ratio of the emitted polarized light and the like, stable over a long time. When the adhesive surfaces of the polarized light beam splitters become loose, the polarization characteristic decreases. Therefore, an adhesive or sealant is applied to the vicinity of the cemented surfaces and the humidity is prevented from being absorbed by the inner sides of the adhesive surfaces. Thus, the connection strength is maintained.

The invention is explained below using several embodiments shown in the accompanying drawings.

### Brief Description of the Drawings

Figure 1 shows a schematic of the entire arrangement of an embodiment of a polarized light illuminator for optical alignment in accordance with the invention;

Figure 2 is a schematic representation of an embodiment in which there is a polarizing device having a polarized light beam splitter between the lens groups of an integrator lens;

Figure 3 schematically represents joining of prisms of a polarized light beam splitter;

Figure 4 schematically depicts an embodiment in which there is an input lens on the light incidence side of the integrator lens;

Figure 5 shows a schematic of an embodiment in which there is a polarizing device comprised of several polarized light beam splitters between the lens groups of an integrator lens;

Figure 6 is a schematic representation of the action of the integrator lens;

Figures 7(a) & 7(b) each show a respective example of an arrangement of several polarized light beam splitters and the respective lenses which form an integrator;

Figure 8 shows another example of an arrangement of several polarized light beam splitters and the respective lenses which form an integrator;

Figure 9 is a schematic representation of an embodiment in which prisms which form polarized light beam splitters and lens groups of a integrator lens are formed integrally with one another;

Figure 10 shows an embodiment in which a polarizing device is comprised of a pile polarization plate between the lens groups of an integrator lens;

Figures 11(a), 11(b) & 11(c) each show a schematic of an example of the shape of a polarizing device in which a pile polarization plate is used; and

Figure 12 schematically shows of a conventional example in which a polarizing device comprised of a pile polarization plate is located in front of the integrator lens.

### Detailed Description of the Invention

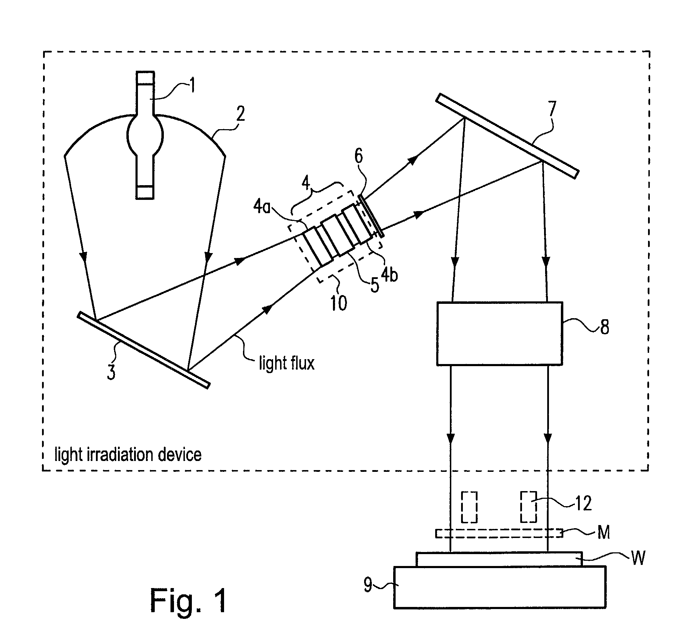

Figure 1 is a schematic of the overall arrangement of an embodiment of a polarized light illuminator in accordance the invention in which light which is emitted from a lamp 1 and which contains UV radiation is focused by an oval focusing mirror 2, reflected by a first planar mirror 3 and is incident on an optical unit 10 comprised of a polarizing device 5 and an integrator lens 4.

In the above described integrator lens 4 there is one lens group 4a on the light incidence side and one lens group 4b on the light exit side, separated from one another. Between the lens group 4a on the light incidence side and the lens group 4b on the light exit side there is a polarizing device 5. The arrangement of an integrator lens in which there is a lens group on both the light incidence side and the light exit side separate is described, for example, in Japanese patent disclosure document SHO 58-50510.

A polarizing device which is described below using a polarized light beam splitter or a pile polarization plate using several glass plates can be used as the polarizing device 5. Furthermore, a polarizing device with resistance to heat and intense light can be used, such as the above described polarizing device using a multi-layer film or the like.

The polarizing device 5 transmits P-polarized light and reflects most of the S-polarized light. The light which emerges from the lens groups 4b on the light exit side of the integrator lens 4 therefore becomes mostly P-polarized light which is reflected via a shutter 6 by means of a second planar mirror 7, is converted into parallel light by means of a collimator 8 and is emitted onto a workpiece W such as a substrate or the like which has been placed on the workpiece carrier 9.

In the case of exposure by the multi-domain method, there are a mask M and an alignment microscope 12, as is shown by the broken lines in Figure 1 (the multi-domain method is described, for example, in the above mentioned published Japanese patent specification 2960392).

One specific example of the arrangement of the optical unit 10 is described below; in it, there is a polarizing device 5 between the lens group 4a on the light incidence side and the lens group 4b on the light exit side.

### (1) 1st embodiment (embodiment in which a polarized light beam splitter is used)

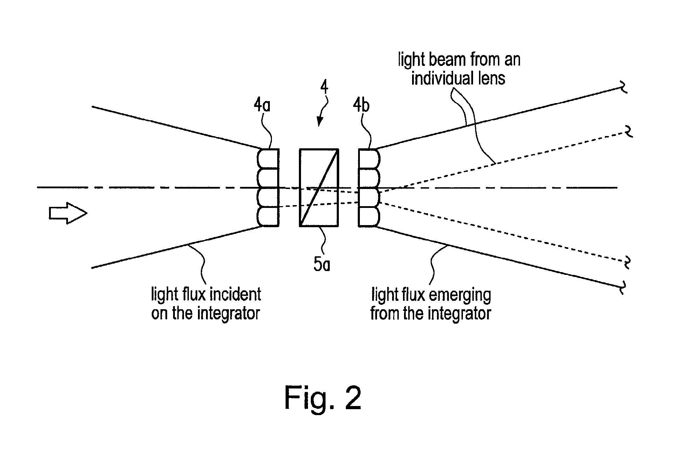

Figure 2 shows the positional relationship between the lens group 4a on the light incidence side of the integrator lens 4, and the lens group 4b on the light exit side and the polarizing device 5a using a polarized light beam splitter in this embodiment. In Figure 2, light is incident on the lens group 4a on the light incidence side. The light emerging from the individual lenses comprising the lens group 4a on the light incidence side is incident on the corresponding respective lenses of the lens group 4b on the light exit side. The polarizing device 5a using the polarized light beam splitter is located in the optical path. The light emerging from the lens group 4a on the light incidence side is incident on the polarizing device 5a, is subjected to polarization separation and is incident on the lens group 4b on the light exit side. The polarized light emerging from the lens group 4b on the light exit side is emitted via an optical element, such as a reflector or the like, onto the irradiation surface, as was described above. The distance between the lens group 4a on the light incidence side and the lens group 4b on the light exit side of the integrator lens 4, as was described above, is computed and set accordingly with consideration of the size (area) of the irradiation surface, the focusing angle of the focusing mirror (angle of incidence of the light incident on the integrator lens 4) and the like. The polarized light beam splitter can be made thinner than the distance between the above described two lens groups 4a and 4b. If the polarizing device 5a using the polarized light beam splitter is inserted between the lens group 4a on the light incidence side and the lens group 4b on the light exit side, the optical path is prevented from becoming large. This prevents the device from becoming large.

In the above described polarized light beam splitter, two prisms were joined to one another via a vacuum evaporated film. Since degradation by UV light occurs when an adhesive or sealant is applied to the joining surface, as was described above, they are joined to one another with "optical contact". "Optical contact" is described, for example, in Japanese patent disclosure document HEI 9-5518 and Japanese patent disclosure document HEI 10-142408.

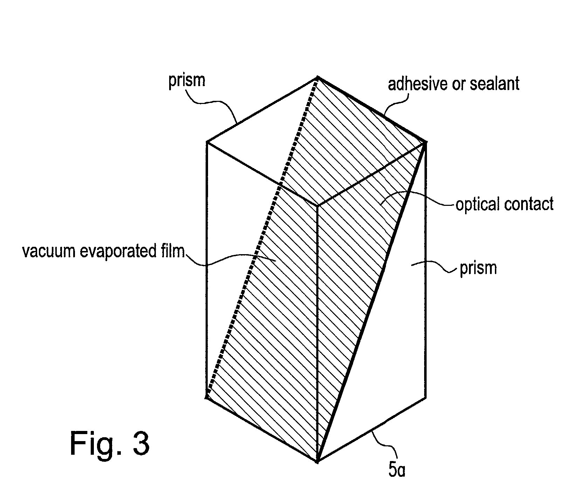

However, "optical contact" is easily lost, as is described, for example, in Japanese patent disclosure document HEI 8-334616 by effects such as temperature change and moisture. Therefore, an adhesive or sealant is applied to the entire peripheral surface of the joining surface, as shown in Figure 3. This can prevent moisture from penetrating into the joining surface and the joining of the prisms from being lost.

The peripheral area of the joining surface of the two prisms is located outside the irradiation area in which the polarized light beam splitter is irradiated with light from the lens group 4a on the light incidence side. This prevents the adhesive used or the sealant used from being degraded by UV light. Even if the adhesive used and the sealant used are degraded, for example, by stray radiation or the like, the illuminance on the irradiation surface is not changed even when the transmission factor of the UV light changes, because the degraded area is located outside of the irradiation area.

As was described above, in this embodiment, a polarizing device 5a using a polarized light beam splitter is inserted between the lens group 4a on the light incidence side and a lens group 4b on the light exit side of the integrator lens 4. Therefore, the space between the lens group 4a on the light incidence side and the lens group 4b on the light exit side can be effectively used and the length of the optical path reduced. Moreover, the diameter of the light beam in the above described space is essentially identical to the diameter of the integrator lens 4. Thus, the diameter of the polarizing device 5a can also be made essentially the same size as the diameter of the integrator lens 4. Therefore, the entire optical unit comprised of the polarizing device 5a and integrator lens 4 can be made smaller. Accordingly, the polarized light illuminator can also be made smaller.

### (2) 2nd embodiment (embodiment in which an input lens is used)

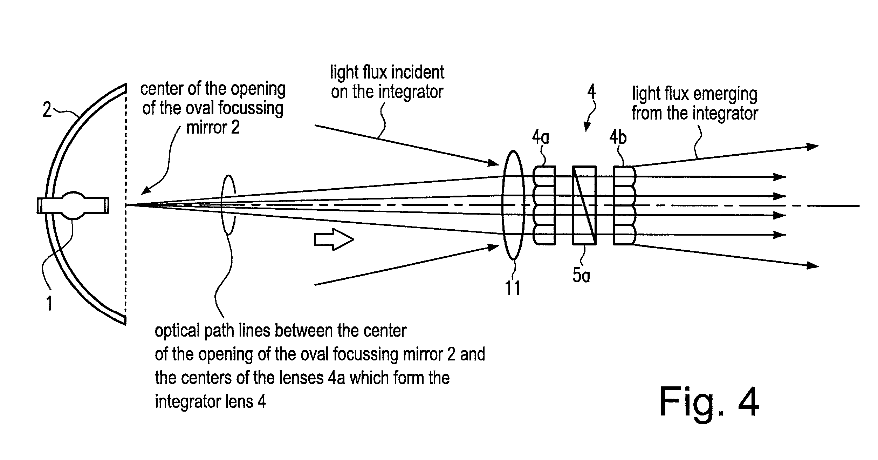

As described in published Japanese patent specification 2960392, the proportion of unpolarized light in the outer peripheral area of the irradiation area is increased or the illuminance of the polarized light is reduced when scattered light (nonparallel light) is incident in the polarizing device because the angle of incidence of the light in the middle area of the polarizing device differs from the angle of incidence of the light in its outside peripheral area. Therefore, it is desirable to place an optical element (a convex lens) on the light incidence side and allow the light to be incident on the polarizing device and the integrator lens, for which optical path lines between the center of the opening of the oval focusing mirror as the light source and the centers of the respective lenses of the integrator lens 4 (hereinafter called only "optical path lines") run parallel to one another. An embodiment is shown in Figure 4 in which there is the above described optical element.

In Figure 4, the optical path lines from the light source are incident on an input lens (convex lens) 11 which is located on the light incidence side, by means of which the respective optical path lines which are incident on the centers of the respective lenses of the lens group 4a on the light incidence side of the integrator lens 4 are made parallel to one another. The light emerging from the individual lenses which form the lens group 4a on the light incidence side is incident on the polarizing device 5a using the polarized light beam splitter, is subjected to polarization separation, and is incident on the lens group 4b on the light exit side. The polarized light emerging from the lens group 4b on the light exit side is emitted via an optical element, such as a reflector or the like, onto the irradiation surface, as was described above.

By the arrangement of the above described input lens 11, the parallel light can be allowed to be incident on the polarizing device 5a (this means that the optical path lines are parallel in this case) and the disadvantages that the proportion of unpolarized light in the outside peripheral area of the irradiation area increases and that the illuminance of the polarized light is reduced can be eliminated.

As shown in Figure 4, by the arrangement of the polarizing device 5a between the two lens groups 4a, 4b comprising the integrator lens 4, the input lens 11 which makes the optical path lines from the light source parallel to one another and the integrator lens 4 can be brought closer to one another until the two come into contact with one another.

Conventionally, the polarizing device 4a was located on the light incidence side or on the light exit side of the integrator lens 4. But due to the above described arrangement of the polarizing device 5a in the space between the two lens groups 4a, 4b, it is no longer necessary to place a polarizing device between the input lens 11 and the integrator lens 4 or to place a polarizing device on the light exit side of the integrator lens 4. Thus, the length of the optical path can be reduced and the size of the optical unit composed of the integrator lens 4 and the polarizing device 5a can be reduced. Accordingly the entire device can be made smaller.

### (3) 3rd embodiment (embodiment in which the several polarized light beam splitters are used)

According to the enlargement of the surface of the liquid crystal cell element, the irradiation area also becomes larger, by which the device also becomes larger and also a large polarizing device is needed. However, the size of the prisms comprising the polarized light beam splitters is limited with respect to production, for example, due to the size of the vacuum evaporation device which forms the vacuum evaporated film. Furthermore, the costs of the quartz prism become very high when the dimensions of the prism become large. When the prisms comprising the polarized light beam splitter become large, the length of the polarized light beam splitter in the direction of the optical axis also becomes large. The reason for this is that it is necessary to adjust the angle of the oblique surfaces of the prisms which form the polarized light beam splitter with respect to the optical axis of the incident light to a stipulated value, and therefore, the length of the polarized light beam splitter in the direction of the optical axis also becomes large according to the enlargement of the polarizing device. Therefore, it is possible for several small polarized light beam splitters to be combined with one anther when a large polarized light beam splitter is necessary.

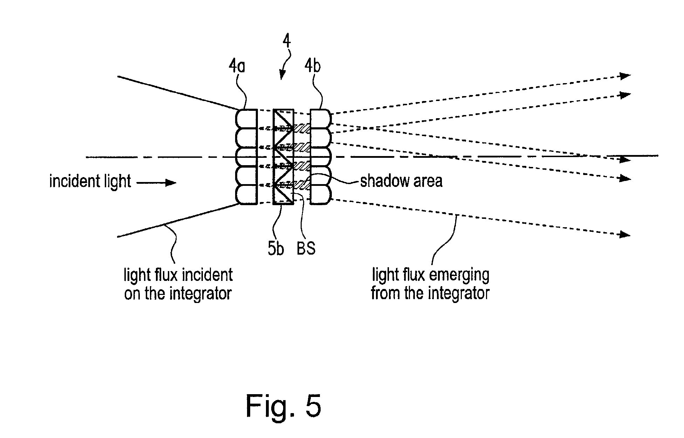

Figure 5 shows an embodiment in which the polarizing device 5a which has been formed by combination of several polarized light beam splitters BS with one another is inserted between the lens group 4a on the light incidence side and the lens group 4b on the light exit side of the integrator lens 4. In this case, the respective polarized light beam splitter BS is produced according to the shape and size of the cross section of the individual lenses forming the integrator lens 4, which cross section is perpendicular to the direction of the optical axis, as shown in Figure 5, and the individual polarized light beam splitters BS are arranged according the arrangement of the above described individual lenses. When, in a combination of several polarized light beam splitters BS with one another, the combined surfaces (boundary surfaces) reach the irradiation area, these areas are shadowed and projected onto the irradiation surface; this reduces the illuminance and degrades the illuminance distribution. Therefore, as shown in Figure 5, the boundary surfaces of the individual polarized light beam splitter BS are located in the shadow areas formed by the incident light being emitted onto the boundary surfaces of the individual lenses which form the lens group 4a on the light incidence side of the integrator lens 4.

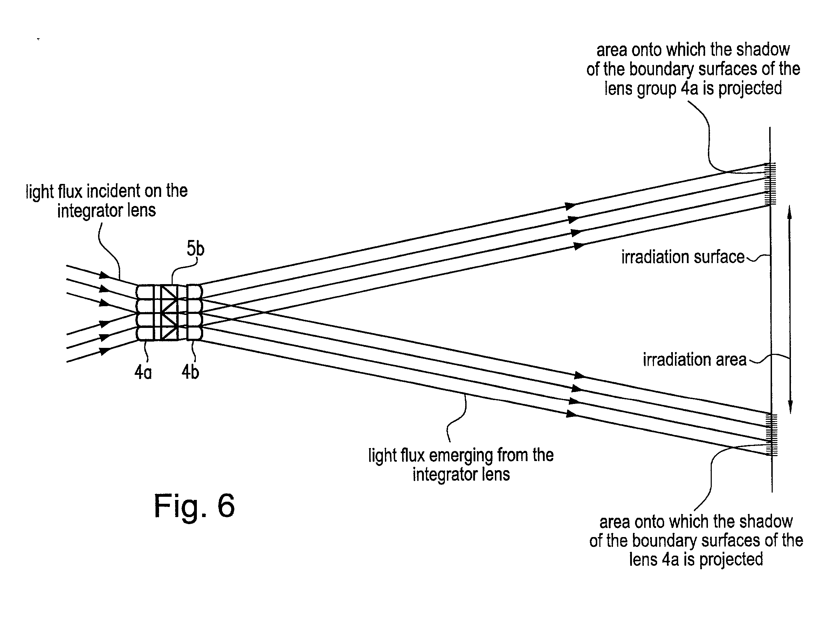

As shown in Figure 6, the shadow is projected by the boundary surfaces of the polarized light beam splitter BS based on the action of the integrator lens 4 outside the irradiation area. The arrangement as shown in Figure 5, where the boundary surfaces of the polarized light beam splitter BS are located in the shadow areas of the boundary surfaces of the respective lenses of the lens group 4a on the light incidence side, prevents the boundary surfaces of the polarized light beam splitters BS from being projected onto the irradiation surface. Therefore, a reduction in illuminance and degradation of the illuminance distribution are prevented.

In Figure 5, the polarizing device 5b and the lens group 4b on the light exit side are shown at a distance from each other to show the shadow of the boundary surfaces of the polarized light beam splitter BS. However, the shadow of the boundary surfaces of the polarized light beam splitters BS is projected onto the boundary surfaces of the lens group 4b on the light exit side without broadening if the two are brought into contact with one another or arranged adjacently very close to one another. Thus, on the irradiation surface the areas in which the illuminance is reduced become smaller.

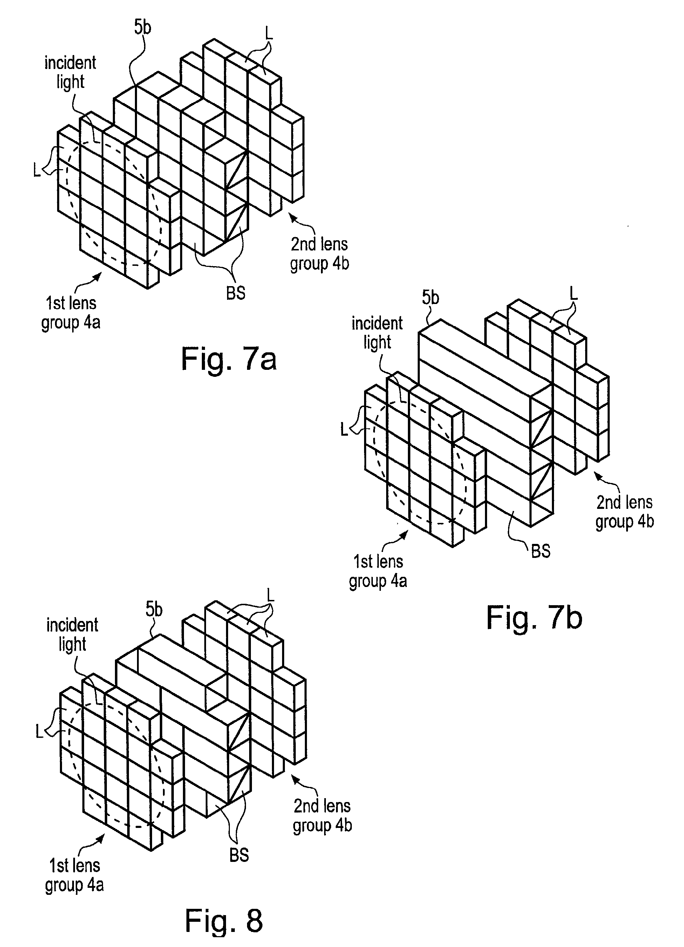

The size and the arrangement of the individual polarized light beam splitters BS can, as shown in Figure 7(a), also be matched to the size and arrangement of the individual lenses L which form the integrator lens. Moreover, as shown in Figure 7(b), using rod-shaped polarized light beam splitters BS, their boundary surfaces can be positioned in the shadow areas of the boundary surfaces of the lens group 4a on the light incidence side. In addition, as shown in Figure 8, several polarized light beam splitters BS with suitable sizes can be combined with one another. In this case, if the irradiation area is rectangular, the shape of the individual lenses comprising the integrator lens 4 can be made rectangular, and thus, rectangular polarized light beam splitters BS can be used.

In this embodiment, an input lens 11 can also be located on the incidence side of the integrator lens 4, as was described above using the second embodiment. In this way, the optical path lines of the light incident on the individual polarized light beam splitters comprising the polarizing device 5b can be made parallel to one another.

The individual polarized light beam splitters BS are, as described in the first embodiment, joined to one another with "optical contact", and the entire periphery of the joining surfaces is covered with an adhesive or sealant. Since the areas to which the adhesive or sealant have been applied are not irradiated with UV light, as was described above, the adhesive or sealant is not degraded. If it is assumed that the adhesive or sealant is degraded, for example, by scattered radiation or the like, the illuminance of the irradiation surface does not change even when the transmission factor of the UV light changes, because the boundary surfaces are outside the irradiation area.

### (4) 4th embodiment (embodiment in which the integrator lens and the polarized light beam splitter are made integral with one another)

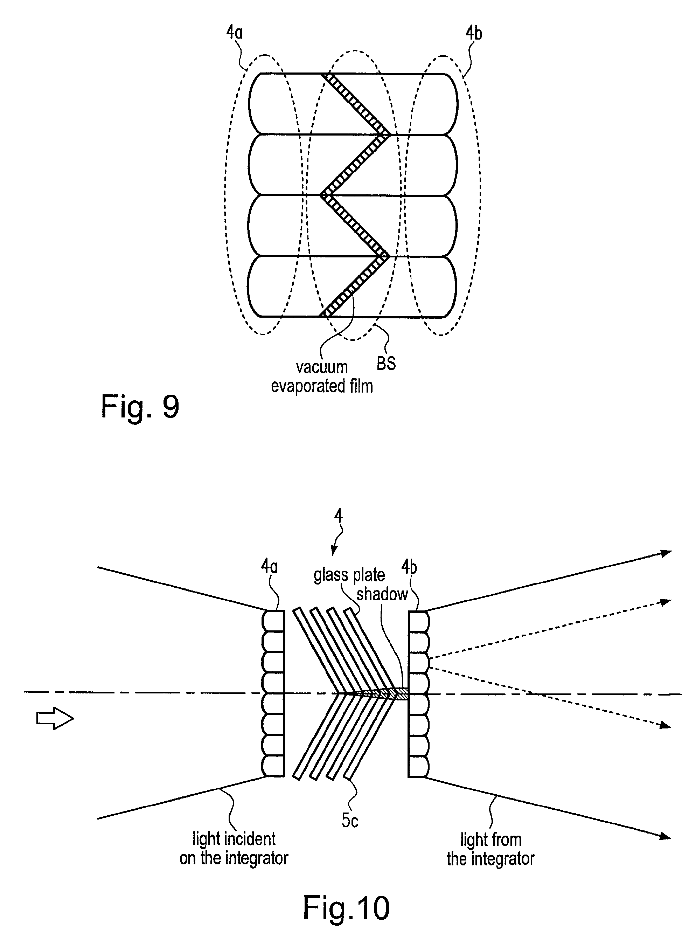

In an arrangement in which several polarized light beam splitters are combined with one another, as in the above described third embodiment, the prisms which form the polarized light beam splitters BS, the individual lenses which form the lens group 4a on the light incidence side of the integrator lens 4, and/or the lens group 4b on the light exit side can be arranged integrally with one another, as shown in Figure 9. This arrangement can reduce the number of components. In this embodiment, there can also be an input lens on the incidence side of the integrator lens 4, as was shown above using the second embodiment.

### (5) 5th embodiment (embodiment in which a pile polarization plate is used)

In the above described embodiments, cases were described in which a polarized light beam splitter is used as the polarizing device 5 which is inserted between the lens group 4a on the light incidence side and a lens group 4b on the light exit side, which comprise the integrator lens 4. However, this polarizing device 5 can also be a polarizing device which has resistance to heat and intense light, such as a pile polarization plate, a polarizing device using a multi-layer film or the like, as was described above.

Figure 10 shows an embodiment in which a pile polarization plate is used as the polarizing device. In Figure 10 a pile polarization plate composed of several glass plates arranged in a > shape is used as the polarizing device 5c. The polarizing device 5c, as in the above described first embodiment, is located between the lens group 4a on the light incidence side and the lens group 4b on the light exit side of the integrator lens 4. In the figure, the light from a light source (not shown) is incident on the lens group 4a on the light incidence side of the integrator lens 4. The light emerging from the individual lenses forming the lens group 4a on the light incidence side is incident on the polarizing device 5c composed of the pile polarization plate, is subjected to polarization separation and is incident on the lens group 4b on the light exit side. The polarized light emerging from the lens group 4b on the light exit side is emitted via an optical element such as a reflector or the like onto the irradiation surface, as was described above.

When using a pile polarization plate with the above described form, the shadow shown in the drawings forms in the joined surfaces (boundary surfaces) of the glass plates. Therefore, the above described boundary surfaces are located in the shadow areas which are formed by the lens groups 4a on the light incidence side being irradiated with incident light, as in the above described third embodiment. This reliably prevents the boundary lines of the pile polarization plates from being projected onto the irradiation surface, as was described above using the second embodiment. Therefore the decrease in illuminance and the deterioration of the distribution of illuminance can be prevented.

The polarizing device using a pile polarization plate can be not only the polarizing device shown in Figure 10, but also polarizing devices with the forms shown in Figure 11(a) to 11(c) in which the above described glass plates are arranged parallel to one another. When a polarizing device with the form shown in Figure 11(a) is used, the light beam of the emerging light does become smaller than the light beam of the incident light. The above described shadow areas do not form.

In this embodiment, on the incident side of the integrator lens 4 there can also be an input lens as was described above using the second embodiment.

### Action of the Invention

As was described above, the following actions can be obtained in accordance with the invention:

(1) In a polarized light illuminator for optical alignment, the integrator lens is arranged such that the lens group on the light incidence side and the lens group on the light exit side are arranged separately from one another. Between the lens group on the light incidence side and the lens group on the light exit side of the above described integrator lens, there is a polarizing device. Therefore, a polarizing device can be used with a diameter which is essentially identical to the diameter of the integrator lens. Furthermore, the space formed between the lens group on the light incidence side and the lens group on the light exit side of the integrator lens can be effectively used.

As a result, a polarizing device with a relatively small diameter can be used, and moreover, insertion of the polarizing device can prevent the optical system from becoming long. This can prevent the entire device from becoming large. Furthermore, costs can be reduced.

(2) The polarizing device is a polarizing device which is formed by a combination of several polarized light beam splitters with one another. Thus, using small prisms, a relatively large polarizing device can be obtained and the length of the polarizing device in the direction of the optical axis can be reduced. This can prevent the entire device from becoming large. In particular, the size of the prisms forming the polarized light beam splitters can be reduced. Therefore, costs can be reduced.

Furthermore, the arrangement of the boundary surfaces of the polarized light beam splitters in the shadow areas formed by the lens boundary surfaces of the lens group on the integrator lens being irradiated with the light incident on the integrator lens can prevent the boundary surfaces of the respective polarized light beam splitters from being projected as shadows onto the irradiation surface.

(3) Because the polarized light beam splitters are joined to one another with "optical contact", the decrease of the UV light transmission factor which occurs due to degradation of the adhesive or sealant can be prevented. Furthermore, the measure that the peripheral area of the adhesive surfaces which have been joined to one another with "optical contact" is covered by an adhesive or sealant, prevents the adhesive surfaces from absorbing moisture. In this way, joining strength can be obtained.

(4) The number of components can be reduced by the integral arrangement of the individual lenses which form the lens group on the light incidence side or the lens groups on the integrator lens.

## Claims

1. Polarized light illuminator for optical alignment, comprising:
an integrator which has an integrator lens with a light incidence side lens group and a light exit side lens group;
a polarizing device in which is light polarized, the polarizing device being located between the light incidence side lens group and the light exit side lens group; and
optical alignment layer positioned to receive polarized light emerging from the light exit side integrator lens group.

2. Polarized light illuminator for optical alignment as claimed in claim 1, wherein the polarizing device is a plurality of polarized light beam splitters, in which prisms are joined to one another via a vacuum deposited film and the boundary surfaces of the polarized light beam splitter are located in shadow areas which are formed by irradiation of the lens boundary surfaces of the lens group on the light incidence side with light which is incident on the integrator lens.

3. Polarized light illuminator for optical alignment as claimed in claim 2, wherein the prisms which form the polarized light beam splitters are integral with lenses of at least one of the lens group on the light incidence side and the lens group on the light exit side of the integrator lens.

4. Polarized light illuminator for optical alignment as claimed in claim 2 or 3, wherein the prisms comprising the polarized light beam splitter are joined to one another with "optical contact" and wherein an adhesive or a sealant is applied to an outer periphery of the joining surfaces.

5. Polarized light illuminator for optical alignment as claimed in claim 1, wherein the polarizing device is a pile polarization plate.

6. Polarized light illuminator for optical alignment as claimed in claim 5, wherein the pile polarization plate comprises a plurality of V-shaped glass plates which are arranged parallel to one another.

7. Polarized light illuminator for optical alignment as claimed in claim 6, wherein boundary surfaces of the V-shaped plates are located in a shadow area which is formed by irradiation of the lens boundary surfaces of the lens group on the light incidence side with the light which is incident on the above described integrator lens.

8. Polarized light illuminator for optical alignment as claimed in any one of claims 1 to 7, wherein a convex lens which converts the light incident on the lens group on the light incidence side into parallel light is located on the light incidence side of the integrator lens.
